# EUROPEAN PATENT APPLICATION

(11) **EP 2 476 322 A2**
(43) Date of publication of application: **18.07.2012**
(21) Application number: 12163842.3
(22) Date of filing: 26.11.2008
(51) Int. Cl.: A23L 1/29

(54) **Age-tailored nutrition system for infants**

(30) Priority: 26.11.2007 EP 07121541
(62) Divisional of application: 08854301.2
(71) Applicant: Nestec S.A., 1800 Vevey (CH)
(72) Inventor: Haschke, Ferdinand, 1814 La Tour de Peilz (CH); Klassen, Petra, 1806 ST Legier (CH); Magliola, Corinne, 1009 Pully (CH); Steven, Matthew, 3510 Konolfingen (CH)
(74) Representative: Corticchiato, Olivier

(57) **Abstract**

The invention relates to the use of a protein source comprising whey and casein proteins for providing an age-tailored nutrition system to an infant which system comprises two infant formulas each appropriate to an infant of a different age and each comprising the protein source wherein the whey:casein ratio of each formula is chosen in the range from 100:0 to 40:60 and decreases according to the age of the infant and the protein content of each formula is chosen in the range from 1.5 to 3.0g protein/100 kcal and decreases according to the age of the infant.

## Description

This invention relates to an age tailored nutrition system for infants.

Research into the components of human milk has been going on for many years and is by no means complete even now. However, it has been known for some time that the composition of human milk changes appreciably with duration of lactation. For example, as described by Lönnerdal et al in Am J Clin Nutr 1976;29:1127 - 33, the protein content of human milk decreases throughout the period of lactation whilst the lactose content increases.

Mother's milk is recommended for all infants. However, in some cases breast feeding is inadequate or unsuccessful for medical reasons or the mother chooses not to breast feed. Infant formulas have been developed for these situations. Conventional infant formulas fall into two categories, starter formulas for infants from the age of birth to 4 to 6 months and which provide complete nutrition for this age group and so-called follow-on formulas for infants between the ages of four to six months and twelve months which are fed to the infants in combination with increasing amounts of other foods such as infant cereals and puréed fruits, vegetables and other foodstuffs as the process of weaning progresses. Many of these commercially available infant formulas are based on cows' milk proteins and contain whey and/or casein proteins although others are based on soy proteins. Where both whey and casein proteins are present, the ratio between them may vary between 90:10 and 10:90.

Typically, the protein content of infant formulas is between 1.8 and 3.5 g/100 kcal with the protein content of starter formulas being towards the lower end of the range and the protein content of follow-on formulas being toward the upper end of the range. For example, the protein content of Nestlé NAN 1 ® starter infant formula is 1.83g/100 kcal and the protein content of Nestlé NAN 2 ® follow-on infant formula is 3.1g/100 kcal.

For the benefit of infants that will not be completely breast fed in the first few months of life, there is a continuing need to develop infant formulas which will replicate human milk as far as possible in terms of its nutritional properties.

### Summary of the Invention

The present invention provides the use of a protein source comprising whey and casein proteins for providing an age-tailored nutrition system to an infant which system comprises two infant formulas each appropriate to an infant of a different age and each comprising the protein source wherein the whey:casein ratio of each formula is chosen in the range from 100:0 to 40:60 and decreases according to the age of the infant and the protein content of each formula is chosen in the range from 1.5 to 3.0g protein/100 kcal and decreases according to the age of the infant.

The invention extends to an age-tailored nutrition system for an infant from birth to two months comprising a first infant formula having a protein source comprising whey and optionally casein proteins and having a whey:casein ratio between 100:0 and 60:40 and a protein content between 2.0 and 3.0g protein/100 kcal and a second infant formula having a protein source comprising whey and casein proteins and having a whey:casein ratio between 70:30 and 50:50 and a protein content between 1.8 and 2.0g protein/100 kcal with the proviso that either the protein content or the whey:casein ratio of the second formula or both is/are lower than for the first formula.

The invention further extends to a method of providing nutrition to an infant in the first six months of life comprising feeding to the infant for at least part of the first one to eight weeks of life a first infant formula having a protein source comprising whey and optionally casein proteins and having a whey:casein ratio between 100:0 and 60:40 and a protein content between 2.0 and 3.0g protein/100 kcal and feeding to the infant for at least part of the remainder of the first six months of life a second infant formula having a protein source comprising whey and casein proteins and having a whey:casein ratio between 70:30 and 50:50 and a protein content between 1.7 and 2.1g protein/100 kcal with the proviso that either the protein content or the whey:casein ratio of the second formula or both is/are lower than for the first formula.

### Detailed Description of the Invention

In this specification, the following terms have the following meanings:-
"Infant "means a child under the age of 12 months;
"Infant formula" means a foodstuff intended for the complete nutrition of infants during the first six months of life.

All percentages are by weight unless otherwise stated.

The invention provides the use of a protein source comprising whey and casein proteins for providing an age-tailored nutrition system to an infant. The system comprises at least two infant formulas, each formula having a whey casein ratio chosen in the range from 100:0 to 40:60, preferably from 70:30 to 50:50 according to the age of the infant and a protein content chosen in the range from 1.5 to 3.0g protein/100 kcal, preferably from 1.8 to 2.5g protein/100 kcal according to the age of the infant. Both the whey: casein ratio and the protein content decrease with increasing age of the infant. Thus, an age tailored nutrition system according to the invention may comprise for example a first infant formula with a whey:casein ratio of 70:30 and a protein content of 2.5g protein/100 kcal for an infant in the first two weeks of life, a second infant formula with a whey:casein ratio of 60:40 and a protein content of 2.0g protein/100 kcal for an infant in the next six weeks of life and a third infant formula with whey:casein ratio of 60:40 and a protein content of 1.8g protein/100 kcal for an infant in the third to sixth months of life.

Such an age-tailored nutrition system may additionally comprise a fourth infant formula having a whey:casein ratio of 50:50 and a protein content of 1.8g protein/100 kcal. Such a formula would be suitable for an infant in the second six months of life.

The infant formulas for use in the present invention may also be supplemented with the bioactive whey protein lactoferrin. Lactoferrin is known *inter alia* to promote the growth and maturation of the gastrointestinal tract in newborn infants. The lactoferrin content of infant formulas for use in the present invention preferably also decreases with increasing age of the infant and counts as part of the protein for the purposes of assessing the protein content of the formula and as part of the whey proteins for the purposes of calculating the whey:casein ratio of the formula. The lactoferrin content of infant formulas for use in the invention is preferably between 0.1 and 1.5 grams/litre, more preferably between 0.3 and 1.0 grams/litre.

The infant formulas for use in the age-tailored nutrition system of the invention may further comprise a carbohydrate source and a lipid source. Either of the carbohydrate content and the lipid content of the formulas may also vary as a function of the age of the infant and preferably both the carbohydrate content and the lipid content will so vary. Generally speaking and at least for infants from birth to 6 months of age, the carbohydrate content may increase with increasing age of the infant for example from 9.0 to 12.0 g carbohydrate/100 kcal, preferably from 10.1 to 11.6g carbohydrate/100 kcal and the lipid content may decrease with increasing age of the infant, for example from 6.0 to 4.5g lipid/100 kcal, preferably from 5.6 to 5.1g lipid/100 kcal.

The type of protein is not believed to be critical to the present invention provided that the minimum requirements for essential amino acid content are met and the requirements as to whey:casein ratio and protein content are satisfied. Thus, protein sources based on whey, casein and mixtures thereof may be used. As far as whey proteins are concerned, acid whey or sweet whey or mixtures thereof may be used as well as alpha-lactalbumin and beta-lactoglobulin in whatever proportions are desired.

The whey protein may be modified sweet whey. Sweet whey is a readily available byproduct of cheese making and is frequently used in the manufacture of infant formulas based on cows' milk. However, sweet whey includes a component which is undesirably rich in threonine and poor in tryptophan called caseino-glyco-macropeptide (CGMP). Removal of the CGMP from sweet whey results in a protein with a threonine content closer to that of human milk. This modified sweet whey may then be supplemented with those amino acids in respect of which it has a low content (principally histidine and tryptophan). A process for removing CGMP from sweet whey is described in EP 880902 and an infant formula based on this modified sweet whey is described in WO 01/11990.

The proteins may be intact or hydrolysed or a mixture of intact and hydrolysed proteins. It may be desirable to supply partially hydrolysed proteins (degree of hydrolysis between 2 and 20%), for example for infants believed to be at risk of developing cows' milk allergy. If hydrolysed proteins are required, the hydrolysis process may be carried out as desired and as is known in the art. For example, a whey protein hydrolysate may be prepared by enzymatically hydrolysing the whey fraction in two steps as described in EP 322589. For an extensively hydrolysed protein, the whey proteins may be subjected to triple hydrolysis using Alcalase 2.4L (EC 940459), then Neutrase 0.5L (obtainable from Novo Nordisk Ferment AG) and then pancreatin at 55°C. If the whey fraction used as the starting material is substantially lactose free, it is found that the protein suffers much less lysine blockage during the hydrolysis process. This enables the extent of lysine blockage to be reduced from about 15% by weight of total lysine to less than about 10% by weight of lysine; for example about 7% by weight of lysine which greatly improves the nutritional quality of the protein source.

The infant formulas for use in the present invention may contain a carbohydrate source. Any carbohydrate source conventionally found in infant formulae such as lactose, saccharose, maltodextrin, starch and mixtures thereof may be used although the preferred source of carbohydrate is lactose.

The infant formulas for use in the present invention may contain a lipid source. The lipid source may be any lipid or fat which is suitable for use in infant formulas. Preferred fat sources include milk fat, palm olein, high oleic sunflower oil and high oleic safflower oil. The essential fatty acids linoleic and α-linolenic acid may also be added as may small amounts of oils containing high quantities of preformed arachidonic acid and docosahexaenoic acid such as fish oils or microbial oils. The lipid source preferably has a ratio of n-6 to n-3 fatty acids of about 5:1 to about 15:1; for example about 8:1 to about 10:1.

The infant formulas for use in the present invention may also contain all vitamins and minerals understood to be essential in the daily diet and in nutritionally significant amounts. Minimum requirements have been established for certain vitamins and minerals. Examples of minerals, vitamins and other nutrients optionally present in the infant formula include vitamin A, vitamin B₁, vitamin B₂, vitamin B₆, vitamin B₁₂, vitamin E, vitamin K, vitamin C, vitamin D, folic acid, inositol, niacin, biotin, pantothenic acid, choline, calcium, phosphorous, iodine, iron, magnesium, copper, zinc, manganese, chloride, potassium, sodium, selenium, chromium, molybdenum, taurine, and L-carnitine. Minerals are usually added in salt form. The presence and amounts of specific minerals and other vitamins will vary depending on the intended infant population.

The infant formulas may also comprise at least one probiotic bacterial strain. A probiotic is a microbial cell preparation or components of microbial cells with a beneficial effect on the health or well-being of the host. Suitable probiotic bacterial strains include *Lactobacillus rhamnosus* ATCC 53103 obtainable from Valio Oy of Finland under the trade mark LGG, *Lactobacillus rhamnosus* CGMCC 1.3724, *Lactobacillus paracasei* CNCM I-2116, Lactobacillus reuteri ATCC 55730 and *Lactobacillus reuteri* DSM 17938 obtainable from BioGaia AB, *Bifidobacterium lactis* CNCM I-3446 sold inter alia by the Christian Hansen company of Denmark under the trade mark Bb 12 and *Bifidobacterium longum* ATCC BAA-999 sold by Morinaga Milk Industry Co. Ltd. of Japan under the trade mark BB536. The amount of probiotic, if present, likewise preferably varies as a function of the age of the infant. Generally speaking, the probiotic content may increase with increasing age of the infant for example from 10e3 to 10e12 cfu/g formula, more preferably between 10e4 and 10e8 cfu/g formula (dry weight).

The infant formulas may also contain at least one prebiotic in an amount of 0.3 to 10%. A prebiotic is a non-digestible food ingredient that beneficially affects the host by selectively stimulating the growth and/or activity of one or a limited number of bacteria in the colon, and thus improves host health. Such ingredients are non-digestible in the sense that they are not broken down and absorbed in the stomach or small intestine and thus pass intact to the colon where they are selectively fermented by the beneficial bacteria. Examples of prebiotics include certain oligosaccharides, such as fructooligosaccharides (FOS) and galactooligosaccharides (GOS). A combination of prebiotics may be used such as 90% GOS with 10% short chain fructo-oligosaccharides such as the product sold under the trade mark Raftilose® or 10% inulin such as the product sold under the trade mark Raftiline®.

A particularly preferred prebiotic is a mixture of galacto-oligosaccharide(s), N-acetylated oligosaccharide(s) and sialylated oligosaccharide(s) in which the N-acetylated oligosaccharide(s) comprise 0.5 to 4.0% of the oligosaccharide mixture, the galacto-oligosaccharide(s) comprise 92.0 to 98.5% of the oligosaccharide mixture and the sialylated oligosaccharide(s) comprise 1.0 to 4.0% of the oligosaccharide mixture. This mixture is hereinafter referred to as "CMOS-GOS". Preferably, a composition for use according to the invention contains from 2.5 to 15.0 wt% CMOS-GOS on a dry matter basis with the proviso that the composition comprises at least 0.02 wt% of an N-acetylated oligosaccharide, at least 2.0 wt% of a galacto-oligosaccharide and at least 0.04 wt% of a sialylated oligosaccharide.

Suitable N-acetylated oligosaccharides include GalNAcα1,3Galβ1,4Glc and Galβ1,6GalNAcα1,3Galβ1,4Glc. The N-acetylated oligosaccharides may be prepared by the action of glucosaminidase and/or galactosaminidase on N-acetyl-glucose and/or N-acetyl galactose. Equally, N-acetyl-galactosyl transferases and/or N-acetyl-glycosyl transferases may be used for this purpose. The N-acetylated oligosaccharides may also be produced by fermentation technology using respective enzymes (recombinant or natural) and/or microbial fermentation. In the latter case the microbes may either express their natural enzymes and substrates or may be engineered to produce respective substrates and enzymes. Single microbial cultures or mixed cultures may be used. N-acetylated oligosaccharide formation can be initiated by acceptor substrates starting from any degree of polymerisation (DP) from DP=1 onwards. Another option is the chemical conversion of keto-hexoses (e.g. fructose) either free or bound to an oligosaccharide (e.g. lactulose) into N-acetylhexosamine or an N-acetylhexosamine containing oligosaccharide as described in Wrodnigg, T.M.; Stutz, A.E. (1999) Angew. Chem. Int. Ed. 38:827-828.

Suitable galacto-oligosaccharides include Galβ1,6Gal, Galβ1,6Galβ1,4Glc Galβ1,6Galβ1,6Glc, Galβ1,3Galβ1,3Glc, Galβ1,3Galβ1,4Glc, Galβ1,6Galβ1,6Galβ1,4Glc, Galβ1,6Galβ1,3Galβ1,4Glc Galβ1,3Galβ1,6Galβ1,4Glc, Galβ1,3Galβ1,3Galβ1,4Glc, Galβ1,4Galβ1,4Glc and Galβ1,4Galβ1,4Galβ1,4Glc. Synthesised galacto-oligosaccharides such as Galβ1,6Galβ1,4Glc Galβ1,6Galβ1,6Glc, Galβ1,3Galβ1,4Glc, Galβ1,6Galβ1,6Galβ1,4Glc, Galβ1,6Galβ1,3Galβ1,4Glc and Galβ1,3Galβ1,6Galβ1,4Glc, Galβ1,4Galβ1,4Glc and Galβ1,4Galβ1,4Galβ1,4Glc and mixtures thereof are commercially available under the trade marks Vivinal ® and Elix'or ®. Other suppliers of oligosaccharides are Dextra Laboratories, Sigma-Aldrich Chemie GmbH and Kyowa Hakko Kogyo Co., Ltd. Alternatively, specific glycoslytransferases, such as galactosyltransferases may be used to produce neutral oligosaccharides.

Suitable sialylated oligosaccharides include NeuAcα2,3Galβ1,4Glc and NeuAcα2,6Galβ1,4Glc. These sialylated oligosaccharides may be isolated by chromatographic or filtration technology from a natural source such as animal milks. Alternatively, they may also be produced by biotechnology using specific sialyltransferases either by enzyme based fermentation technology (recombinant or natural enzymes) or by microbial fermentation technology. In the latter case microbes may either express their natural enzymes and substrates or may be engineered to produce respective substrates and enzymes. Single microbial cultures or mixed cultures may be used. Sialyl-oligosaccharide formation can be initiated by acceptor substrates starting from any degree of polymerisation (DP) from DP=1 onwards.

The infant formulas may optionally contain other substances which may have a beneficial effect such as nucleotides, nucleosides, and the like.

The infant formulas for use in the invention may be prepared in any suitable manner. For example, an infant formula may be prepared by blending together the protein source, the carbohydrate source, and the fat source in appropriate proportions. If used, the emulsifiers may be included in the blend. The vitamins and minerals may be added at this point but are usually added later to avoid thermal degradation. Any lipophilic vitamins, emulsifiers and the like may be dissolved into the fat source prior to blending. Water, preferably water which has been subjected to reverse osmosis, may then be mixed in to form a liquid mixture.

The liquid mixture may then be thermally treated to reduce bacterial loads. For example, the liquid mixture may be rapidly heated to a temperature in the range of about 80°C to about 110°C for about 5 seconds to about 5 minutes. This may be carried out by steam injection or by heat exchanger; for example a plate heat exchanger.

The liquid mixture may then be cooled to about 60°C to about 85°C; for example by flash cooling. The liquid mixture may then be homogenised; for example in two stages at about 7 MPa to about 40 MPa in the first stage and about 2 MPa to about 14 MPa in the second stage. The homogenised mixture may then be further cooled to add any heat sensitive components; such as vitamins and minerals. The pH and solids content of the homogenised mixture is conveniently standardised at this point.

The homogenised mixture is transferred to a suitable drying apparatus such as a spray drier or freeze drier and converted to powder. The powder should have a moisture content of less than about 5% by weight.

If it is desired to add probiotic(s), they may be cultured according to any suitable method and prepared for addition to the infant formula by freeze-drying or spray-drying for example. Alternatively, bacterial preparations can be bought from specialist suppliers such as Christian Hansen and Morinaga already prepared in a suitable form for addition to food products such as infant formula. Such bacterial preparations may be added to the powdered infant formula by dry mixing.

The invention extends to an age-tailored nutrition system for an infant from birth to two months comprising a first infant formula having a protein source comprising whey and optionally casein proteins and having a whey:casein ratio between 100:0 and 60:40 and a protein content between 2.0 and 3.0g protein/100 kcal and a second infant formula having a protein source comprising whey and casein proteins and having a whey:casein ratio between 70:30 and 50:50 and a protein content between 1.8 and 2.0g protein/100 kcal.

The invention extends to a method of providing nutrition to an infant in the first six months of life comprising feeding to the infant for at least part of the first one to eight weeks of life a first infant formula having a protein source comprising whey and optionally casein proteins and having a whey:casein ratio between 100:0 and 60:40 and a protein content between 2.0 and 3.0g protein/100 kcal and feeding to the infant for at least part of the remainder of the first six months of life a second infant formula having a protein source comprising whey and casein proteins and having a whey:casein ratio between 70:30 and 50:50 and a protein content between 1.7 and 2.1g protein/100 kcal with the proviso that either the protein content or the whey:casein ratio of the second formula or both is/are lower than for the first formula.

Preferably the method according to the invention comprises feeding to the infant for about the first two to four weeks of life a first infant formula having a protein source with a whey:casein ration between 80:20 and 60:40 and a protein content between 2.0 and 3.0g protein/100 kcal then feeding to the infant a second infant formula having a whey:casein ratio between 70:30 and 50:50 and a protein content between 1.8 and 2.0g protein/100 kcal. Even more preferably, the second infant formula is fed from the age of two to four weeks to the age of about two months and a third infant formula also having a whey:casein ratio between 70:30 and 50:50 and a protein content between 1.8 and 2.0g protein/100 kcal wherein either the protein content or the whey:casein ratio of the second formula or both is/are lower than for the second formula is fed for the remainder of the first six months of the infant's life.

The age-tailored nutrition system according to the invention is particularly suitable for use in a method of preparing single servings of infant formula using disposable capsules each of which contains a unit dose of formula in concentrated form and which is equipped with opening means contained within the capsule to permit draining of the reconstituted formula directly from the capsule into a receiving vessel such as a baby bottle. Such a method is described in WO2006/077259. The different formulas may be packed into individual capsules and presented to the consumer in multipacks containing a sufficient number of capsules to meet the requirements of an infant for one week for example. Suitable capsule constructions are disclosed in WO2003/059778.

The capsules may contain the infant formulas in the form of powders or concentrated liquids, in both cases for reconstitution by an appropriate amount of water. Both the composition and the quantity of infant formula in the capsules may vary according to the age of the infant. If necessary, different sizes of capsules may be provided for the preparation of infant formulas for infants of different ages.

It will be appreciated that the provision of capsules, or other units such as stick packs or sachets, each of which contains a sufficient amount of an infant formula closely adapted to the needs of an infant of a particular age to prepare a single serving of infant formula offers a parent or other care-giver the opportunity more closely to approximate the infant's feeding regime to that of the "gold standard" - an infant that is breast fed on demand. In other words, because it is, relatively speaking, quicker and more convenient to prepare a feed by comparison with conventional methods of preparing infant formula and because the feed will be more closely adapted to the requirements of an infant of the relevant age, the parent or other care-giver will find it easier to feed the infant as required by the infant. Although infants up to the age of about six months are generally thought to require feeding every four hours, there is in fact a great variation in requirements between different infants and even the same infant at different stages of development in the first six months.

Examples of age-tailored nutrition systems according to the invention are given below by way of illustration only. As will be appreciated by those skilled in the art, in addition to the ingredients specified below, the exemplified infant formulas will also contain other ingredients usually found in such products notably including vitamins and minerals.

### Example 1

| **Age Range** | **1-2 weeks** | **3-4 weeks** | **1-2 months** | **3-4 months** | **5-6 months** | **7-12 months** |
|---|---|---|---|---|---|---|
| **Energy density (kcal/ml)** | 63 | 63 | 63 | 63 | 63 | 63 |
| **Protein content (g/100kcal)** | 2.5 | 2.0 | 2.0 | 1.8 | 1.8 | 1.8 |
| **Whey:casein** | 70:30 | 60:40 | 60:40 | 60:40 | 60:40 | 50:50 |
| **Lactoferrin (g/l)** | 1.0 | 0.5 | 0.5 | 0.3 | 0.3 | |
| **Carbohydrate type** | Lactose | Lactose | Lactose | Lactose | Lactose | Lactose/ maltodextrin |
| **Carbohydrate content (g/100kcal)** | 9.85 | 10.7 | 10.7 | 11.6 | 11.6 | 10.6 |
| **Prebiotic** | GOS/FOS | GOS/FOS | GOS/FOS | GOS/FOS | GOS/FOS | GOS/FOS |
| **Lipid type** | Milk/veg | Milk/veg | Milk/veg | Milk/veg | Milk/veg | Veg |
| **Lipid content (g/100 kcal** | 5.6 | 5.4 | 5.4 | 5.1 | 5.1 | 5.6 |
| **LC-PUFA** | DHA/ARA | DHA/ARA | DHA/ARA | DHA/ARA | DHA/ARA | DHA/ARA |
| **Probiotic type** | *B. lactis* | *B. lactis* | *B. lactis* | *B. lactis* | *B. lactis* | *B. lactis* |
| **Probiotic content (cfu/g)** | 10e4 | 10e4 | 10e4 | 2.10e7 | 2.10e7 | 2.10e7 |

### Example 2

| **Age Range** | **0 - 1 month** | **2^{nd} month** | **3-6 months** | **7-8 months** | **9-12 months** |
|---|---|---|---|---|---|
| **Energy density (kcal/ml)** | 65 | 65 | 63 | 63 | 61 |
| **Protein content (g/100kcal)** | 2.25 | 1.9 | 1.8 | 1.8 | 1.8 |
| **Whey:casein** | 70:30 | 60:40 | 60:40 | 50:50 | 50:50 |
| **Lactoferrin (g/l)** | 1.0 | 0.5 | 0.3 | 0.3 | - |
| **Carbohydrate type** | Lactose | Lactose | Lactose | Lactose | Lactose/malto dextrin |
| **Carbohydrate content (g/100kcal)** | 10.1 | 11.1 | 11.6 | 10.6 | 10.6 |
| **Prebiotic** | CMOS-GOS | CMOS-GOS | CMOS-GOS | CMOS-GOS | CMOS-GOS |
| **Lipid type** | Milk/veg | Milk/veg | Milk/veg | Veg | Veg |
| **Lipid content (g/100 kcal** | 5.6 | 5.3 | 5.1 | 5.6 | 5.6 |
| **LC-PUFA** | DHA/ARA | DHA/ARA | DHA/ARA | DHA/ARA | DHA/ARA |
| **Probiotic type** | *B. lactis* | *B. lactis* | *B. lactis* | *B. lactis* | *B. lactis* |
| **Probiotic content (cfu/g)** | 5x10e4 | 5x10e4 | 2x10e7 | 2x10e7 | 2.10e7 |

### Claims of parent patent application :

1. Use of a protein source comprising whey and casein proteins for providing an age-tailored nutrition system to an infant which system comprises two infant formulas each appropriate to an infant of a different age and each comprising the protein source wherein the whey:casein ratio of each formula is chosen in the range from 100:0 to 40:60 and decreases according to the age of the infant and the protein content of each formula is chosen in the range from 1.5 to 3.0g protein/100 kcal and decreases according to the age of the infant.
2. The use of Claim 1, wherein the whey: casein ratio of each formula is chosen in the range from 70:30 to 50:50.
3. The use of Claim 1 or 2, wherein the protein content of each formula is chosen in the range from 1.8 to 2.5g protein/100kcal.
4. The use of any preceding claim, wherein the nutrition system additionally comprises a third infant formula having either a lower whey: casein ratio or a lower protein content than either of the two other infant formulas.
5. The use of Claim 4, wherein the nutrition system additionally comprises a fourth infant formula having either a lower whey: casein ratio or protein content than any of the three other infant formulas.
6. The use of any preceding claim, wherein the infant formulas additionally comprise a carbohydrate source and the carbohydrate content of each formula is chosen in the range from 9.0 to 12.0g carbohydrate/100kcal generally increasing with increasing age of the infant.
7. The use of Claim 6, wherein the carbohydrate source is lactose.
8. The use of any preceding claim, wherein the infant formulas additionally comprise a lipid source and the lipid content of each formula is chosen in the range from 4.5 to 6.0g lipid/100kcal generally decreasing with increasing age of the infant.
9. The use of Claim 8, wherein the lipid source includes milk fat.
10. The use of any preceding claim, wherein the infant formulas are supplemented with lactoferrin and the lactoferrin content of each formula is chosen in the range from 1.5 to 0.1 grams/litre decreasing with increasing age of the infant.
11. The use of any preceding claim, wherein the infant formulas additionally comprise a probiotic bacterial strain and the probiotic content of each formula is chosen in the range from 10e3 to 10e12 cfu/g formula (dry weight) generally increasing with increasing age of the infant.
12. The use of Claim 11, wherein the probiotic bacterial strain is *Bifidobacterium lactis* CNCM I-3446.
13. An age-tailored nutrition system for an infant from birth to two months comprising a first infant formula having a protein source comprising whey and optionally casein proteins and having a whey:casein ratio between 100:0 and 60:40 and a protein content between 2.0 and 3.0g protein/100 kcal and a second infant formula having a protein source comprising whey and casein proteins and having a whey:casein ratio between 70:30 and 50:50 and a protein content between 1.8 and 2.0g protein/100 kcal with the proviso that either the protein content or the whey:casein ratio of the second formula or both is/are lower than for the first formula.
14. A system according to Claim 13, wherein the first infant formula has a whey casein ratio of 70:30 and the second infant formula has a whey casein ratio of 60:40.
15. A system according to Claim 13 or 14, wherein the first infant formula has a protein content between 2.4 and 3.0g protein/100 kcal and the second infant formula has a protein content between 1.8 and 2.2g protein/100 kcal.
16. A system according to any of Claims 13 to 15, wherein the infant formulas additionally comprise a carbohydrate source, the carbohydrate content of the first infant formula being between 9 and 11g carbohydrate/100g formula and the carbohydrate content of the second infant formula being between 10 and 12g carbohydrate/100g formula.
17. A system according to Claim 16, wherein the carbohydrate source is lactose.
18. A system according to any of Claims 13 to 17, wherein the infant formulas additionally comprise a lipid source, the lipid content of the first infant formula being between 5.5 and 6g lipid/100g formula and the lipid content of the second infant formula being between 4.5 and 5.5g lipid/100g formula.
19. A system according to Claim 18, wherein the lipid source includes milk fat.
20. A system according to Claim 18 or 19, wherein the lipid source includes arachidonic acid and docosahexaenoic acid.
21. A system according to any of Claims 13 to 20, wherein the infant formulas are supplemented with lactoferrin and the lactoferrin content of the first infant formula is between 0.8 and 1.5 grams/litre and the lactoferrin content of the second infant formula is between 0.3 and 0.7 grams/litre.
22. A system according to any of Claims 13 to 21, wherein the infant formulas additionally comprise a probiotic bacterial strain.
23. A system according to any of Claims 13 to 22 wherein the infant formulas are packed in units, each unit containing sufficient infant formula in concentrated form to prepare a single serving of infant formula upon reconstitution with an appropriate amount of water.
24. A method of providing nutrition to an infant in the first six months of life comprising feeding to the infant for at least part of the first one to eight weeks of life a first infant formula having a protein source comprising whey and optionally casein proteins and having a whey:casein ratio between 100:0 and 60:40 and a protein content between 2.0 and 3.0g protein/100 kcal and feeding to the infant for at least part of the remainder of the first six months of life a second infant formula having a protein source comprising whey and casein proteins and having a whey:casein ratio between 70:30 and 50:50 and a protein content between 1.7 and 2.1g protein/100 kcal with the proviso that either the protein content or the whey:casein ratio of the second formula or both is/are lower than for the first formula.
25. A method according to Claim 24, wherein the first infant formula has a whey casein ratio of 70:30 and the second infant formula has a whey casein ratio of 60:40.
26. A method according to Claim 24 or 25, wherein the first infant formula has a protein content between 2.4 and 3.0g protein/100 kcal and the second infant formula has a protein content between 1.8 and 2.2g protein/100 kcal.
27. A method according to any of Claims 24 to 26, wherein the infant formulas additionally comprise a carbohydrate source, the carbohydrate content of the first infant formula being between 9 and 11g carbohydrate/100g formula and the carbohydrate content of the second infant formula being between 10 and 12g carbohydrate/100g formula.
28. A method according to Claim 27, wherein the carbohydrate source is lactose.
29. A method according to any of Claims 24 to 28, wherein the infant formulas additionally comprise a lipid source, the lipid content of the first infant formula being between 5.5 and 6g lipid/100g formula and the lipid content of the second infant formula being between 4.5 and 5.5g lipid/100g formula.
30. A method according to Claim 29, wherein the lipid source includes milk fat.
31. A method according to Claim 29 or 30, wherein the lipid source includes arachidonic acid and docosahexaenoic acid.
32. A method according to any of Claims 24 to 31, wherein the infant formulas are supplemented with lactoferrin and the lactoferrin content of the first infant formula is between 0.8 and 1.5 grams/litre and the lactoferrin content of the second infant formula is between 0.3 and 0.7 grams/litre.
33. A method according to any of Claims 24 to 32, wherein the infant formulas additionally comprise a probiotic bacterial strain.
34. A method according to any of Claims 24 to 33 wherein the infant formulas are packed in units, each unit containing sufficient infant formula in concentrated form to prepare a single serving of infant formula upon reconstitution with an appropriate amount of water.
35. A method of providing on demand nutrition to an infant in the first six months of life comprising feeding to the infant for at least part of the first one to eight weeks of life a first infant formula having a protein source comprising whey and optionally casein proteins and having a whey:casein ratio between 100:0 and 60:40 and a protein content between 2.0 and 3.0g protein/100 kcal and feeding to the infant for at least part of the remainder of the first six months of life a second infant formula having a protein source comprising whey and casein proteins and having a whey:casein ratio between 70:30 and 50:50 and a protein content between 1.7 and 2.1g protein/100 kcal with the proviso that either the protein content or the whey:casein ratio of the second formula or both is/are lower than for the first formula wherein the infant formulas are packed in units, each unit containing sufficient infant formula in concentrated form to prepare a single serving of infant formula upon reconstitution with an appropriate amount of water.

## Claims

1. Use of a protein source comprising whey and casein proteins for providing an age-tailored nutrition system to an infant which system comprises two infant formulas each appropriate to an infant of a different age and each comprising the protein source wherein the whey:casein ratio of each formula is chosen in the range from 100:0 to 40:60 and decreases according to the age of the infant and wherein a first infant formula has a protein content between 2.0 and 3.0 g protein/100 kcal and a second infant formula has a protein content between 1.5 and 2.0 g protein/100 kcal.

2. The use of Claim 1, wherein the whey: casein ratio of each formula is chosen in the range from 70:30 to 50:50.

3. The use of any preceding claim, wherein the nutrition system additionally comprises a third infant formula having either a lower whey: casein ratio or a lower protein content than either of the two other infant formulas.

4. The use of Claim 3, wherein the nutrition system additionally comprises a fourth infant formula having either a lower whey: casein ratio or protein content than any of the three other infant formulas.

5. The use of any preceding claim, wherein the infant formulas additionally comprise a lipid source and the lipid content of each formula is chosen in the range from 4.5 to 6.0g lipid/100kcal generally decreasing with increasing age of the infant.

6. The use of Claim 6, wherein the lipid source includes milk fat.

7. The use of any preceding claim, wherein the infant formulas additionally comprise a probiotic bacterial strain and the probiotic content of each formula is chosen in the range from 10e3 to 10e12 cfu/g formula (dry weight) generally increasing with increasing age of the infant.

8. The use of Claim 7, wherein the probiotic bacterial strain is *Bifidobacterium lactis* CNCM I-3446.

9. An age-tailored nutrition system for an infant from birth to two months comprising a first infant formula having a protein source comprising whey and optionally casein proteins and having a whey:casein ratio between 100:0 and 60:40 and a protein content between 2.0 and 3.0g protein/100 kcal and a second infant formula having a protein source comprising whey and casein proteins and having a whey:casein ratio between 70:30 and 50:50 and a protein content between 1.5 and 2.0g protein/100 kcal. with the proviso that either the protein content or the whey:casein ratio of the second formula or both is/are lower than for the first formula.

10. A system according to Claim 9, wherein the first infant formula has a protein content between 2.4 and 3.0g protein/100 kcal and the second infant formula has a protein content between 1.5 and 2.0g protein/100 kcal.

11. A system according to any of Claims 9 or 10, wherein the infant formulas additionally comprise a lipid source, the lipid content of the first infant formula being between 5.5 and 6g lipid/100g formula and the lipid content of the second infant formula being between 4.5 and 5.5g lipid/100g formula.

12. A system according to any of Claims 9 to 11 wherein the infant formulas are packed in units, each unit containing sufficient infant formula in concentrated form to prepare a single serving of infant formula upon reconstitution with an appropriate amount of water.

13. A method of providing nutrition to an infant in the first six months of life comprising feeding to the infant for at least part of the first one to eight weeks of life a first infant formula having a protein source comprising whey and optionally casein proteins and having a whey:casein ratio between 100:0 and 60:40 and a protein content between 2.0 and 3.0g protein/100 kcal and feeding to the infant for at least part of the remainder of the first six months of life a second infant formula having a protein source comprising whey and casein proteins and having a whey:casein ratio between 70:30 and 50:50 and a protein content between 1.7 and 2.0g protein/100 kcal with the proviso that either the protein content or the whey:casein ratio of the second formula or both is/are lower than for the first formula.

14. A method according to Claim 13 , wherein the first infant formula has a whey casein ratio of 70:30 and the second infant formula has a whey casein ratio of 60:40.

15. A method according to any of Claims 13 or 14 wherein the infant formulas additionally comprise a lipid source, the lipid content of the first infant formula being between 5.5 and 6g lipid/100g formula and the lipid content of the second infant formula being between 4.5 and 5.5g lipid/100g formula.

16. A method of providing on demand nutrition to an infant in the first six months of life comprising feeding to the infant for at least part of the first one to eight weeks of life a first infant formula having a protein source comprising whey and optionally casein proteins and having a whey:casein ratio between 100:0 and 60:40 and a protein content between 2.0 and 3.0g protein/100 kcal and feeding to the infant for at least part of the remainder of the first six months of life a second infant formula having a protein source comprising whey and casein proteins and having a whey:casein ratio between 70:30 and 50:50 and a protein content between 1.7 and 2.0g protein/100 kcal with the proviso that either the protein content or the whey:casein ratio of the second formula or both is/are lower than for the first formula wherein the infant formulas are packed in units, each unit containing sufficient infant formula in concentrated form to prepare a single serving of infant formula upon reconstitution with an appropriate amount of water.
